# EUROPÄISCHE PATENTSCHRIFT

(11) **EP 2 489 458 B1**
(45) Veröffentlichungstag und Bekanntmachung des Hinweises auf die Patenterteilung: **06.04.2022**
(21) Anmeldenummer: 12155189.9
(22) Anmeldetag: 13.02.2012
(51) Int. Cl.: B23K 26/06, B23K 26/38, B23K 26/36, B23K 26/08

(54) **Laserbearbeitungsvorrichtung mit umschaltbarer Laseranordnung und Laserbearbeitungsverfahren**
Laser processing device with switchable laser assembly and laser processing method
Dispositif de traitement laser doté d'un agencement laser commutable et procédé de traitement laser

(30) Priorität: 16.02.2011 DE 102011000768
(43) Veröffentlichungstag der Anmeldung: 22.08.2012
(73) Patentinhaber: Fritz Studer AG, 3612 Steffisburg (CH)
(72) Erfinder: Plüss, Christoph, 3400 Burgdorf (CH)
(74) Vertreter: Rüger Abel Patentanwälte PartGmbB

(56) Entgegenhaltungen:
- WO-A1-02/094528
- WO-A1-2006/024585
- DE-A1- 10 352 402
- DE-A1- 19 860 585
- DE-A1- 19 920 813
- DE-A1-102008 022 449
- DE-U1-202008 012 529
- JP-A- 6 126 477
- US-A1- 2004 089 638

## Beschreibung

Die Erfindung betrifft ein Laserbearbeitungsverfahren zum Bearbeiten eines Werkstücks mit einem Laser . Bei dem Werkstück handelt es sich beispielsweise um ein Halbzeug, aus dem eine Schneidplatte oder ein rotierendes Schneidwerkzeug mit einer Schneidkante, einer Spanfläche und einer Freifläche hergestellt werden soll.

Vorrichtungen und Verfahren zur Bearbeitung von Werkstücken mittels Laser sind an sich bekannt. Beispielsweise beschreibt DE 100 20 559 A1 eine Vorrichtung zur Bearbeitung eines Materials mit ultrakurzen Laserimpulsen. Die Laserimpulse weisen dabei eine Impulsdauer von weniger als 300 Pikosekunden auf. Die Vorrichtung weist ferner eine Untersuchungseinrichtung auf, die dazu dient, erste Laserpulse auf das Material bzw. das Werkstück zu applizieren, die Resultate dieser Applikation zu detektieren und daraus Informationen über das Werkstück zu erhalten.

US RE 39 001 E beschreibt ein Verfahren zum Schneiden eines keramischen Wafers. Der Laser erzeugt in dem Wafer eine V-förmige Nut. Hierfür werden mehrere seitlich gegeneinander versetzte lineare Bearbeitungsdurchgänge durchgeführt, um die V-Form zu erhalten. Anschließend kann mittig in der V-förmigen Nut durch einen oder weitere Bearbeitungsdurchgänge in einer Ebene das vollständige Durchtrennen des Wafers an der gewünschten Stelle erfolgen.

Ferner offenbart WO 99/03635 ein Verfahren sowie eine Vorrichtung zum Herstellen einer Stanzform. Dabei wird ein Laserstrahl entweder zu einer Fokussieroptik gelenkt, um Nuten in ein insbesondere aus Holz bestehendes Werkstück zur Aufnahme von Schneid- oder Rillenmessern zu schneiden. Oder der Laserstrahl wird über einen umklappbaren Spiegel, der sich vor der Fokussieroptik befindet, umgelenkt und zu einem Scanner gelenkt werden. Über den Scanner können in das Werkstück Gravuren eingebracht werden. Für das Gravieren kann die Laserleistung reduziert werden. Die Gravuren dienen dazu, das mit den Nuten versehene Werkstück zu beschriften, um das spätere Bestücken des Werkstücks mit Messern zu vereinfachen.

JP 06126477 A offenbart eine Laserbearbeitungsmaschine mit mehreren Laserköpfen für unterschiedliche Arbeitsvorgänge, wie beispielsweise Schneiden oder Schweißen.

Aus US 2004/0089638 A1 zweigt ebenfalls eine Laserbearbeitungsmaschine mit zwei Laserköpfen, die zum Kleben durch Erhitzen bzw. zum Schweißen verwendet werden.

Aus DE 103 52 402 A1 ist eine Laserbearbeitungsmaschine mit zwei Laserköpfen bekannt. Die erste Laserabtragsvorrichtung dient beispielsweise zum Laserbohren, die zweite Laserabtragsvorrichtung dient beispielsweise zur Gesenkbildung. Beim Laserbohren wird durch eine Mischung von Verflüssigung und Verdampfung ein Loch eingebrannt. Bei der Gesenkbildung kann schichtweise Material durch Verdampfen abgetragen werden. Es ist somit möglich, ein Werkstück in einer Aufspannung in zwei Arbeitsvorgängen mit den beiden Laserabtragsvorrichtungen zu bearbeiten.

Der vorliegenden Erfindung liegt die Aufgabe zugrunde, die Herstellung eines Werkstücks und insbesondere einer Schneidplatte oder eines rotierenden Schneidwerkzeugs sehr wirtschaftlich durchführen zu können und gleichzeitig die Qualität der bearbeiteten Kanten und Flächen, insbesondere der Schneidkante eines hergestellten Schneidwerkzeugs sicher zu stellen. Insbesondere soll das Verfahren geeignet sein, aus einem Werkstück ein Schneidwerkzeug mit Schneidkante und Freifläche herzustellen.

Diese Aufgabe wird durch das Laserbearbeitungsverfahren mit den Merkmalen des Patentanspruches 1 gelöst.

Eine Laserbearbeitungsvorrichtung weist ein Haltemittel zum Halten des Werkstücks auf. Sie enthält außerdem eine Laseranordnung mit einem ersten Laserkopf, der insbesondere als Schneidkopf ausgeführt ist und einem zweiten Laserkopf, der vorzugsweise als Scannerkopf realisiert ist. Die Laseranordnung enthält auch eine Laserquelle zur Erzeugung von Laserpulsen. Die Laseranordnung ist zwischen einem ersten Betriebsmodus und einem zweiten Betriebsmodus umschaltbar. Im ersten Betriebsmodus wird der erste Laserkopf und im zweiten Betriebsmodus der zweite Laserkopf zum Abstrahlen und Fokussieren der Laserimpulse auf das Werkstück verwendet. Mehrere Zustellachsen dienen zum Bewegen und/oder Positionieren des Haltemittels bzw. des Werkstücks relativ zu den beiden Laserköpfen. Auf diese Weise ist eine räumliche, sozusagen dreidimensionale Bearbeitung der Kontur des Werkstücks möglich, um beispielsweise die Schneidkante und die daran angrenzende Freifläche herzustellen. Die Zustellachsen können Rundführungen und/oder Linearführungen aufweisen. Vorzugsweise sind fünf oder sechs Zustellachsen vorgesehen.

Erfindungsgemäß wird im ersten Betriebsmodus das Werkstück durch thermische Einwirkung der Laserimpulse bearbeitet. Vorzugsweise wird das Werkstück durch Laserschmelzschneiden bearbeitet. Die Laserimpulse weisen im ersten Betriebsmodus eine höhere mittlere Leistung auf als im zweiten Betriebsmodus. Die mittlere Leistung im ersten Betriebsmodus kann beispielsweise zwischen 50 Watt und 400 Watt liegen, während sie im zweiten Betriebsmodus zwischen 10 Watt und 100 Watt betragen kann. Vorzugsweise werden im ersten Betriebsmodus Laserimpulse mit einer Impulsdauer im Nanosekundenbereich erzeugt, während die Laserimpulse im zweiten Betriebsmodus eine Impulsdauer im Pikosekundenbereich aufweisen. Im ersten Betriebsmodus kann dadurch sozusagen eine Schruppbearbeitung des Werkstücks mit sehr großen Schneidgeschwindigkeiten durchgeführt werden. Zum Beispiel können im ersten Betriebsmodus Schneiden aus polykristallinem Diamant (PKD) bei einer Dicke von ein bis zwei Millimetern mit Vorschubgeschwindigkeiten von 20 bis 30 Metern pro Minute durch das Laserschmelzschneiden geschnitten werden.

Zwar werden im ersten Betriebsmodus hohe Bearbeitungsgeschwindigkeiten erreicht, jedoch wird durch die thermische Einwirkung des Lasers auf das Werkstück eine wärmebeeinflusste Zone am Werkstück erzeugt, die sich negativ auf die Eigenschaften des beispielsweise herzustellenden Schneidwerkzeugs auswirkt. Im zweiten Betriebsmodus bearbeitet die Laseranordnung das Werkstück daher durch Laserablation. Das Material wird durch die ultrakurzen Laserimpulse in eine Plasmawolke umgewandelt, wobei die Einwirkungsdauer der Laserimpulse derart gering ist, dass keine wärmebeeinflusste Zone entsteht. Die Einwirkzeit des Laserimpulses auf das Werkstück ist hierfür zu gering. Während dieses zweiten Betriebsmodus wird zumindest ein Teil und insbesondere die gesamte wärmebeeinflusste Zone, die im ersten Betriebsmodus entstanden ist, wieder entfernt. Zumindest in den Bereichen des Werkstücks, in denen eine hohe Qualität gefordert ist, wie zum Beispiel im Bereich der Schneidkante eines Schneidwerkzeugs, wird die wärmebeeinflusste Zone entfernt. Das Werkstück wird in beiden Betriebsmodi an derselben Stelle der Außenkontur zur Schaffung der gewünschten dreidimensionalen Form bearbeitet. Durch das zweistufige Verfahren kann das Werkstück in einer Aufspannung im Haltemittel sehr wirtschaftlich bearbeitet werden. Schneidwerkzeuge lassen sich auf diese Weise besonders effizient herstellen. Außerdem ist eine hohe Qualität der Werkstückbearbeitung sichergestellt.

Vorzugsweise weist die Laseranordnung eine umschaltbare Laserquelle zum Beispiel in Form eines Festkörperlasers und insbesondere eines Scheibenlasers auf. Der Laserkristall des Lasers in Form eines Stabes und insbesondere einer Scheibe kann in beiden Betriebsmodi zur Verstärkung des Lichts der jeweils eingesetzten Lichtpumpe verwendet werden. Die Lichtpumpe erzeugt im ersten Betriebsmodus Lichtimpulse im Nanosekundenbereich entsprechend der gewünschten Impulsdauer der Laserimpulse. Gleichermaßen erzeugt sie im zweiten Betriebsmodus Lichtpulse im Pikosekundenbereich. Es ist auch möglich, für jeden Betriebsmodus eine separate Lichtpumpe vorzugehen. Als Lichtpumpe können beispielsweise eine oder mehrere Laserdioden verwendet werden. Die Laserquelle kann auch zwei Resonatoranordnungen mit jeweils einem oder mehreren Resonatorspiegeln aufweisen, wobei abhängig vom Betriebsmodus die erste oder zweite Resonatoranordnung verwendet wird. Eine solche Laserquelle kann auch eigenständig und unabhängig von den übrigen Merkmalen der Erfindung realisiert und für andere Anwendungen verwendet werden.

Es ist vorteilhaft, wenn der erste Fokusbereich, in dem die vom ersten Laserkopf abgegebenen Laserimpulse fokussiert werden können, räumlich keine Überschneidungen aufweist mit dem zweiten Fokusbereich, in dem die vom zweiten Laserkopf abgegebenen Laserimpuls fokussiert werden können. Insbesondere ist der erste Fokusbereich des ersten Laserkopfes entlang dessen optischer Achse in einem ersten Arbeitsabstand zum ersten Laserkopf angeordnet. Der zweite Fokusbereich befindet sich in einem zweiten Arbeitsabstand vom zweiten Laserkopf. Der zweite Arbeitsabstand ist bei einer bevorzugten Ausführung größer als der erste Arbeitsabstand. Dies hat den Vorteil, dass während des Bearbeitens des Werkstücks im zweiten Betriebsmodus räumliche Bewegungen und/oder Positionierungen des Werkstücks gegenüber dem zweiten Laserkopf ungehindert vom ersten Laserkopf möglich sind. In der Regel erfordert die Schlichtbearbeitung des Werkstücks im zweiten Betriebsmodus eine komplexere Ausrichtung und Bewegung des Werkstücks gegenüber dem zweiten Laserkopf unter Verwendung der Zustellachsen als dies im ersten Betriebsmodus bei der Schruppbearbeitung der Fall ist. Wir der zweite Arbeitsabstand größer gewählt als der erste Arbeitsabstand, so ist ein ausreichend großer Freiraum zur Werkstückbewegung vorhanden.

Bei einem Ausführungsbeispiel der Laserbearbeitungsvorrichtung sind die beiden Laserköpfe relativ zueinander unbeweglich angeordnet, wobei ihre optischen Achsen vorzugsweise parallel zueinander ausgerichtet sind.

Die Laserbearbeitungsvorrichtung weist bevorzugt außerdem ein bewegbares und beispielsweise linear verstellbares Umlenkmittel auf, beispielsweise einen Umlenkspiegel. Das Umlenkmittel kann in den Strahlengang der Laserimpulse bewegt bzw. aus dem Strahlengang herausbewegt werde. Abhängig von der Position des Umlenkmittels werden die Laserimpulse entweder zum ersten Laserkopf oder zum zweiten Laserkopf gelenkt. Auf diese Weise wird sehr einfach sichergestellt, dass nur einer der beiden Laserköpfe betrieben wird.

Vorteilhafte Ausgestaltungen der Erfindung ergeben sich aus den abhängigen Patentansprüchen sowie der Beschreibung. In der Beschreibung wird die Erfindung anhand von einem Ausführungsbeispiel erläutert. Die Beschreibung beschränkt sich dabei auf die wesentlichen Merkmale der Erfindung. Die Zeichnungen sind ergänzend heranzuziehen. Es zeigen:
Figur 1 ein Blockschaltbild eines Ausführungsbeispiels der Laserbearbeitungsvorrichtung,
Figur 2 eine schematische Seitenansicht der Laserbearbeitungsvorrichtung nach Figur 1,
Figur 3 eine schematische blockschaltbildähnliche Darstellung einer Laserquelle für die Laserbearbeitungsvorrichtung,
Figur 4 eine schematische Darstellung der Bearbeitung des Werkstücks im ersten Betriebsmodus und
Figur 5 eine schematische Darstellung der Bearbeitung des Werkstücks im zweiten Betriebsmodus.

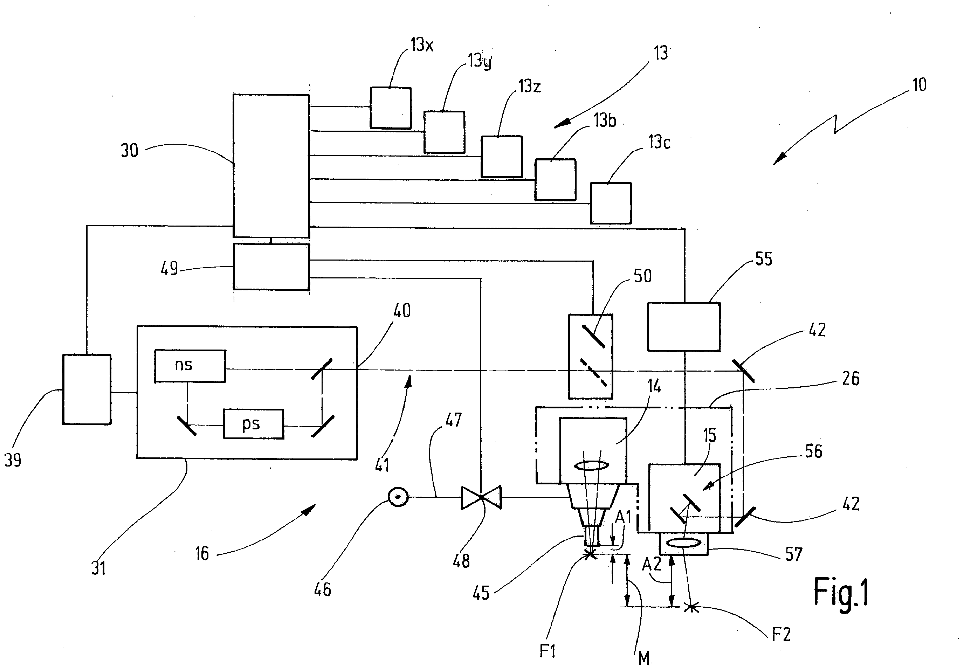

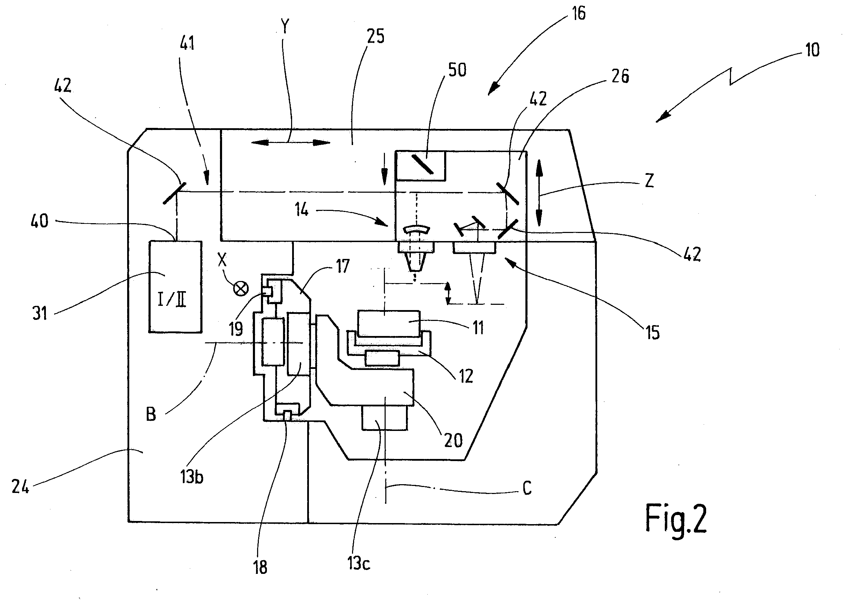

In den Figuren 1 und 2 ist ein Ausführungsbeispiel einer Laserbearbeitungsvorrichtung 10 zur Bearbeitung eines Werkstücks 11 mit Laserimpulsen dargestellt. Die Laserbearbeitungsvorrichtung 10 weist ein Haltemittel 12 zum Halten bzw. Einspannen des Werkstücks 11 auf. Über beispielsgemäß fünf Zustellachsen 13 kann das Haltemittel 12 bzw. das Werkstück 11 relativ zu einem ersten Laserkopf 14 und einem zweiten Laserkopf 15 einer Laseranordnung 16 bewegt und/oder positioniert werden. Die Anzahl der Zustellachsen 13 kann abhängig von der gewünschten Bearbeitung des Werkstücks 11 auch variieren. Es können bis zu sechs Zustellachsen 13 vorgesehen sein.

Beim Ausführungsbeispiel sind die Zustellachsen 13 zum Teil als Linearführung und zum Teil als Rundführung ausgestaltet. Eine erste Linearführung 13x weist einen in X-Richtung linear verschiebbaren Schlitten 17 auf, der sich beim Ausführungsbeispiel von oben auf einer ersten Schiene 18 abstützt und an dieser sowie einer parallel dazu verlaufenden zweiten Schiene 19 geführt gelagert ist.

Auf dem Schlitten 17 ist eine erste Rundführung 13b angeordnet, an der ein L-förmiges Halteteil 20 mit einem ersten Schenkel um eine erste Drehachse B drehbar gelagert ist. Der andere Schenkel des Halteteils 20 erstreckt sich in etwa parallel zur Drehachse B und verläuft mit Abstand zu dieser. An diesem Schenkel des Halteteils 20 ist eine zweite Rundführung 13c angeordnet, an der das Haltemittel 12 um eine zweite Drehachse C drehbar gelagert ist. Die zweite Drehachse C verläuft rechtwinklig zur ersten Drehachse B und beim Ausführungsbeispiel in einer Vertikalebene.

Die beiden Schienen 18, 19 sind an einem Maschinengestell 24 befestigt. Am Maschinengestell 24 ist beim Ausführungsbeispiel oberhalb des Schlittens 17 ein Balken 25 angeordnet, der eine zweite Linearführung 13y zur Bewegung der Laserköpfe 14, 15 in Y-Richtung bildet. An dem Balken 25 ist ein in Z-Richtung mittels einer dritten Linearführung 13z verschiebbarer Schlitten 26 angeordnet, der die beiden Laserköpfe 14, 15 trägt. Die beiden Laserköpfe 14, 15 sind mithin über die zweite Linearführung 13y und die dritte Linearführung 13z in zwei rechtwinkelig zueinander ausgerichtete Raumrichtungen linear verschiebbar.

Die Zustellachsen 13 werden von einer Steuereinrichtung 30 der Laserbearbeitungsvorrichtung 10 angesteuert. Während der Werkstückbearbeitung wird das Werkstück 11 relativ zum ersten Laserkopf 14 bzw. zum zweiten Laserkopf 15 bewegt, positioniert und ausgerichtet, so dass die Laserimpulse unter einem vorgegebenen Winkel und an einer vorgegebenen Stelle auf das Werkstück 11 auftreffen.

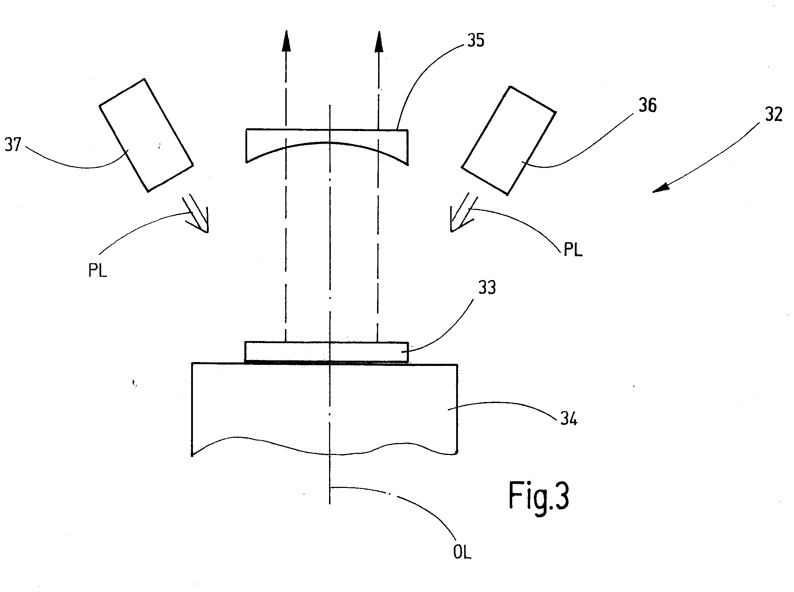

Die Laseranordnung 16 enthält eine Laserquelle 31, die in einem ersten Betriebsmodus I Laserimpulse mit einer Impulsdauer im Nanosekundenbereich und in einem zweiten Betriebsmodus II der Laseranordnung 16 Laserimpulse mit einer Impulsdauer im Pikosekundenbereich erzeugt. Die mittlere Leistung der Laserimpulse ist im ersten Betriebsmodus I größer als im zweiten Betriebsmodus II. Zur Erzeugung der Laserimpulse weist die umschaltbare Laserquelle 31 beim bevorzugten Ausführungsbeispiel einen Scheibenlaser 32 auf, wie er schematisch in Figur 3 veranschaulicht ist. Der Scheibenlaser 32 weist einen Laserkristall in Form einer Scheibe 33 auf, die beispielsweise einige hundert Mikrometer dick sein kann. Die Scheibe 33 ist zur Kühlung auf einem Kühlkörper 34 flächig angeordnet. Die optische Achse OL des Scheibenlasers 32 verläuft rechtwinklig zur Scheibe 33. Diese ist auf ihrer dem Kühlkörper 34 zugewandten Rückseite mit einer reflektierenden Beschichtung bedangt und dient somit gleichzeitig als Resonatorspiegel. Mit Abstand zur Scheibe 33 ist auf der optischen Achse OL ein Ausgangskoppler 35 zur Bündelung des von der Scheibe 33 abgegebenen Laserlichts vorgesehen. Der in Form der Scheibe 33 ausgeführte Laserkristall wird durch das Licht PL einer Lichtpumpe 36, 37 angeregt. Das Licht der Lichtpumpen 36, 37 durchläuft die Scheibe 33 dabei mehrfach. Um dies zu gewährleisten können weitere Linsen und/oder Resonatorspiegel vorgesehen sein, die in Figur 3 der Übersicht halber nicht dargestellt sind. Es ist dabei möglich zwei Resonatoranordnungen mit Linsen und/oder Resonatorspiegeln vorzusehen, wobei die eine Resonatoranordnung im ersten Betriebsmodus I und die andere Resonatoranordnung im zweiten Betriebsmodus II verwendet wird. Beide Resonatoranordnungen verwenden die Scheibe 33 einem Resonatorspiegel auf deren Rückseite.

Die wenigstens eine Lichtpumpe 36, 37 erzeugt Lichtimpulse. Im ersten Betriebsmodus I haben die Lichtimpulse eine Dauer im Nanosekundenbereich, während die im zweiten Betriebsmodus II eine Dauer im Pikosekundenbereich haben. Als Lichtpumpe 36, 37 kann beispielsweise eine Laserdiode eingesetzt werden. Es ist auch möglich, für den ersten Betriebsmodus I eine erste Lichtpumpe 36 und für den zweiten Betriebsmodus II eine zweite Lichtpumpe 37 vorzusehen. In beiden Betriebsmodi I, II dient derselbe Laserkristall als Verstärker des Pumpenlichts PL. Beim Ausführungsbeispiel ist dies die Scheibe 33.

Zum Umschalten der Laserquelle 31 vom ersten Betriebsmodus I in den zweiten Betriebsmodus II und umgekehrt ist eine Laserquellensteuerung 39 vorgesehen, die von der Steuereinrichtung 30 angesteuert wird. Die Laserquellensteuerung 39 stellt den Sollwert für die Impulsdauer der Laserimpulse und den Sollwert für die mittlere Leistung der Laserimpulse ein.

Die Laserimpulse werden von der umschaltbaren Laserquelle 31 in beiden Betriebsmodi I, II an einem Laserquellenausgang 40 abgegeben und entlang eines Strahlengangs 41 zu den beiden Laserköpfen 14, 15 geleitet. Hierfür können mehrere Spiegel 42 oder andere Umlenkeinrichtungen im Strahlengang 41 angeordnet sein.

Beim Ausführungsbeispiel ist der erste Laserkopf 14 als Schneidkopf ausgeführt. Der Schneidkopf weist eine Schneiddüse 45 auf, durch die nahe an einem ersten Fokusbereich F1 des ersten Laserkopfes 14 ein Gas aus einer Gaszufuhr 46 über eine Zufuhrleitung 47 auf das zu bearbeitende Werkstück 11 im ersten Betriebsmodus abgegeben werden kann. Zur Steuerung der Gasmenge ist in der Zufuhrleitung ein Ventil 48 angeordnet, das über eine Schneidkopfsteuerung 49 angesteuert wird.

Der erste Fokusbereich F1 stellt einen Punkt oder eine Strecke auf der optischen Achse O1 des ersten Laserkopfes 14 dar. Der Fokus der Laserimpulse des ersten Laserkopfes 14 kann sich in einem unveränderlichen Abstand zum ersten Laserkopf 14 befinden. Der Fokus der Laserimpulse kann alternativ auch über eine Optik des ersten Laserkopfes 14 innerhalb des ersten Fokusbereichs F1 auf der optischen Achse O1 in vorgegebenen Grenzen verstellt werden.

Die Schneidkopfsteuerung 49 dient auch dazu, einen bewegbaren und beispielsgemäß verschiebbaren Umlenkspiegel 50 zwischen einer ersten Position und einer zweiten Position, die in Figur 1 gestrichelt dargestellt ist, zu verschieben. In seiner zweiten Position befindet sich der Umlenkspiegel 50 im Strahlengang 41 und lenkt die von der Laserquelle 41 abgegebenen Laserimpulse in den ersten Laserkopf 14 um. Befindet sich der Umlenkspiegel 50 außerhalb des Strahlengangs 41, werden die Laserimpulse entlang des Strahlengangs 41 zum zweiten Laserkopf 15 gelenkt. Die Schneidkopfsteuerung 49 wird durch die Steuereinrichtung 30 angesteuert.

Die Steuereinrichtung 30 steuert außerdem eine Scannersteuerung 55 an, die den zweiten Laserkopf 15 steuert, der mit einer Scanneroptik 56 ausgestattet ist. Die Scanneroptik besteht beispielsweise aus zwei oder mehr schwenkbaren Spiegeln, so dass die vom zweiten Laserkopf 15 über eine Fokussieroptik 57 abgegebenen Laserimpulse in einem Flächenbereich auf die Oberfläche des Werkstücks 11 gerichtet werden können. Der zweite Laserkopf 15, der als Scannerkopf ausgeführt ist, richtet die Laserimpulse somit in einem zweiten Fokusbereich F2 auf die Werkstückoberfläche. Der zweite Fokusbereich F2 stellt eine Fläche auf dem Werkstück 11 dar, die rechtwinklig oder schräg zur optischen Achse des zweiten Laserkopfes 15 ausgerichtet sein kann.

Der erste Fokusbereich F1 hat vom ersten Laserkopf 14 und beispielsgemäß vom freien Ende der Schneiddüse 45 einen ersten Arbeitsabstand A1. Die Auftreffstelle des fokussierten Laserimpulses im zweiten Fokusbereich F2 auf der Werkstückoberfläche hat einen zweiten Arbeitsabstand A2 von dem zweiten Laserkopf 15 bzw. von dessen Fokussieroptik 57. Der zweite Arbeitsabstand A2 ist um einen Mindestwert M größer als der erste Arbeitsabstand A1. Der erste Arbeitsabstand A1 beträgt einige Zehntel Millimeter bis maximal etwa zwei oder drei Millimeter. Der zweite Arbeitsabstand A2 ist vorzugsweise größer als fünf bis zwanzig Zentimeter.

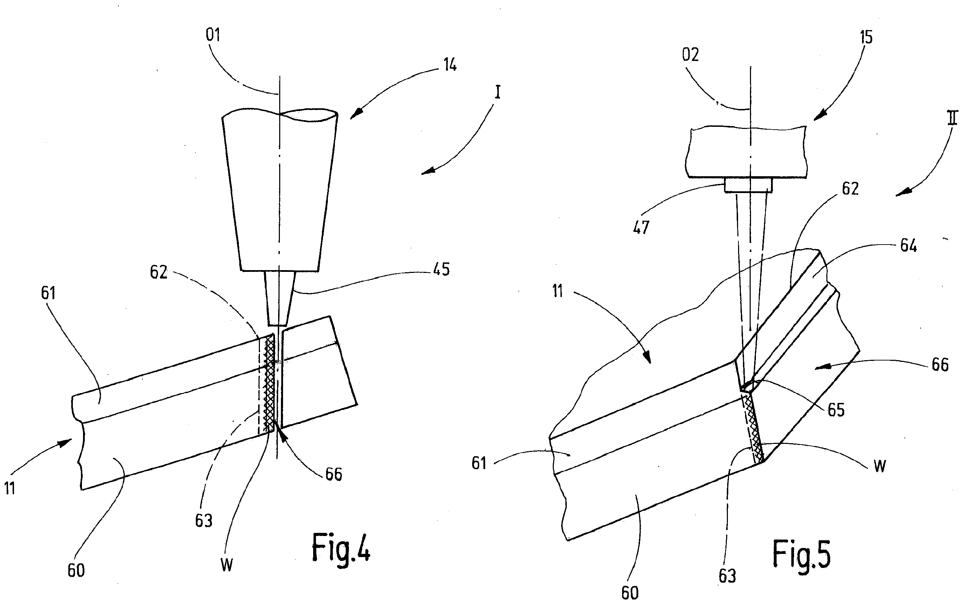

Unter Verweis auf die Figuren 4 und 5 wird die Betriebsweise und ein bevorzugtes Laserbearbeitungsverfahren nachfolgend beschrieben.

Zunächst wird das Werkstück 11 über die Haltemittel 12 eingespannt. Das Werkstück 11 ist beispielsweise ein Halbzeug, aus dem eine Schneidplatte oder ein rotierendes Schneidwerkzeug hergestellt wird. Das Werkstück 11 weist einen Grundkörper 60 aus Hartmetall auf, der eine Schneidschicht 61 trägt. Die Schneidschicht 61 besteht beim Ausführungsbeispiel aus polykristallinem Diamant. An dieser Schneidschicht 61 wird beim fertig bearbeitenden Werkstück 11 die Schneikante 62 angeordnet sein.

Das Werkstück 11 wird entsprechend den herzustellenden Freiwinkel schräg zur optischen Achse O1 des ersten Laserkopfes 14 ausgerichtet. Die umschaltbare Laserquelle 31 wird zur Erzeugung von Laserimpulsen im Nanosekundenbereich eingestellt. Die mittlere Leistung der Laserimpulse beträgt hierbei zwischen 50 Watt und 400 Watt. Der Umlenkspiegel 50 wird in den Strahlengang 41 gefahren, so dass die von der Laserquelle 31 erzeugten Laserimpulse zum ersten Laserkopf 14 gelenkt werden. Die Laserbearbeitungsvorrichtung 10 arbeitet im ersten Betriebsmodus I, der in Figur 4 schematisch veranschaulicht ist. Dabei wird das Werkstück 11 durch die thermische Einwirkung der Laserstrahlimpulse durch Laserschmelzschneiden bearbeitet. Während des Schneidens des Werkstücks 11 kann dieses im ersten Betriebsmodus I mit einem großen Vorschub von 20 bis 30 Metern pro Minute bewegt werden. Auf diese Weise lassen sich die groben Konturen des Werkstücks erzeugen. Wegen des hohen Vorschubs erfolgt die Bearbeitung im ersten Betriebsmodus I sehr schnell. Im ersten Betriebsmodus I findet sozusagen eine Schruppbearbeitung statt.

Allerdings entsteht dabei benachbart zur Schnittfläche eine wärmebeeinflusste Zone W, die in Figur 4 durch eine gekreuzte Schraffur schematisch dargestellt ist. Die durch Laserschmelzschneiden erzeugte Schnittfläche 66 wird im ersten Betriebsmodus I daher mit Abstand zur endgültigen Sollkontur 63 angeordnet, wobei dieser Abstand größer ist als die Tiefe der wärmebeeinflussten Zone W ausgehend von der Schnittfläche 66 in das Werkstück 11 hinein. Als Sollkontur 63 ist in Figur 4 die Freifläche gestrichelt dargestellt.

Im Anschluss daran wird die Laseranordnung 16 der Laserbearbeitungsvorrichtung 10 in den zweiten Betriebsmodus II umgeschaltet. Diesem zweiten Betriebsmodus II wird der zweite Laserkopf 15 verwendet. Deswegen wird der Umlenkspiegel 50 aus dem Strahlengang 41 herausbewegt. Die umschaltbare Laserquelle 31 wird umgeschaltet und liefert Laserimpulse mit kürzerer Impulsdauer als im ersten Betriebsmodus I, die beispielsgemäß im Pikosekundenbereich liegt. Diese Laserimpulse werden vom Laserquellenausgang 40 in den Strahlengang 41 eingespeist und über Umlenkspiegel 42 zum zweiten Laserkopf 15 gelenkt. Dort werden die Laserimpulse über die Scanneroptik 56 und die Fokussieroptik 57 auf die Werkstückoberfläche gerichtet, wie dies in Figur 5 dargestellt ist. Die mittlere Leistung der Laserimpulse ist geringer als im ersten Betriebsmodus I und beträgt beispielsweise 10 Watt bis maximal 100 Watt.

In diesem zweiten Betriebsmodus II wird das Material vom Werkstück 11 nicht durch thermische Einwirkung abgetrennt, sondern durch Laserablation in Plasma umgewandelt. Diese rapide Erhitzung des Werkstücks an der Auftreffstelle des Laserimpulses und die dadurch bewirkte Plasmabildung führt dazu, dass sich die Wärme in Werkstück 11 nicht ausbreiten kann. Im zweiten Betriebsmodus II entsteht deswegen keine wärmebeeinflusste Zone am Werkstück 11. Eine wärmebeeinflusste Zone W hat Nachteile im Hinblick auf die Qualität des herzustellenden Werkzeugs, insbesondere wenn aus dem Werkstück 11 ein Schneidwerkzeug mit einer Schneikante 62 hergestellt wird. Die im ersten Betriebsmodus I entstandene wärmebeeinflusste Zone W wird während der Werkstückbearbeitung im zweiten Betriebsmodus II beim Ausführungsbeispiel vollständig entfernt. Zumindest jedoch muss die wärmebeeinflusste Zone W im Bereich der Schneidkante 62 entfernt werden, um eine ausreichende Standzeit des hergestellten Schneidwerkzeugs zu erreichen.

Der Materialabtrag erfolgt im zweiten Betriebsmodus II durch den zweiten Laserkopf 15 derart, dass die Laserimpulse in einer vorgegebenen Reihenfolge auf eine zweidimensionale Pulsfläche 65 gerichtet werden. Die Pulsfläche 65 ist dabei schräg zur optischen Achse O2 des zweiten Laserkopfes 15 ausgerichtet. Während die Laserpulse durch die Scanneroptik 56 des zweiten Laserkopfes 15 innerhalb der Pulsfläche 65 auf die Vielzahl von Auftreffstellen gerichtet werden, wird gleichzeitig über eine oder mehrere der Zustellachsen 13 eine Relativbewegung des Werkstücks 11 gegenüber dem zweiten Laserkopf 15 verursacht. Diese Relativbewegung ist um Größenordnungen langsamer als die Geschwindigkeit, mit der die Laserimpulse durch die Scanneroptik 56 entlang der Auftreffstellen innerhalb der Pulsfläche 65 bewegt werden. Somit wird im Bereich der Pulsfläche 65 ein Materialabtrag erreicht, der durch die Relativbewegung über die Zustellachsen 13 langsam entlang des Werkstücks 11 fortschreitet. In diesem zweiten Betriebsmodus II wird durch die Laserablation mittels des zweiten Laserkopfes 15 die endgültige Sollkontur 63 am Werkstück 11 erzeugt. Beim Ausführungsbeispiel entsteht dabei die Schneidkante 62 und die sich daran anschließende Freifläche 64. Die wärmebeeinflusste Zone W wird in diesem zweiten Bearbeitungsschritt im zweiten Betriebsmodus II vollständig entfernt.

Die Erfindung betrifft ein Verfahren zur Bearbeitung eines Werkstücks 11. Aus dem Werkstück 11 wird ein rotierendes Schneidwerkzeug mit einer Schneidkante 62 und einer Freifläche 64 hergestellt. Die Laserbearbeitungsvorrichtung 10 arbeitet in zwei verschienen Betriebsmodi I, II. Im ersten Betriebsmodus I dient ein erster Laserkopf 14 zur Bearbeitung des Werkstücks 11 mit großen Vorschubgeschwindigkeiten des Werkstücks 11 relativ zum ersten Laserkopf 14. Dabei wird das Werkstück 11 durch Laserschmelzschneiden in eine grobe Sollkontur geschnitten. Die Dauer der Laserimpulse liegt im ersten Betriebsmodus I im Nanosekundenbereich. Anschließend wird die Laserbearbeitungsvorrichtung 10 im zweiten Betriebsmodus II betrieben. Dabei werden Laserimpulse mit Impulsdauer im Pikosekundenbereich erzeugt, die eine geringere mittlere Leistung haben als im ersten Betriebsmodus I. Es wird im zweiten Betriebsmodus II ein zweiter Laserkopf 15 in Form eines Scannerkopfes mit einer Scanneroptik 56 aktiviert. Dieser richtet die Laserimpulse auf eine zweidimensionale Pulsfläche 65 auf der Oberfläche des Werkstücks 11. Der Materialabtrag erfolgt im zweiten Betriebsmodus II im Unterschied zum ersten Betriebsmodus I durch Laserablation. Die im ersten Betriebsmodus I aufgrund der thermischen Einwirkung der Laserimpulse auf das Werkstück 11 gebildete wärmebeeinflusste Zone W wird in der nachfolgenden Bearbeitung durch Laserablation zumindest teilweise wieder entfernt, so dass eine hohe Qualität des bearbeiteten Werkstücks 11 erreicht wird.

### Bezugszeichenliste:

- 10: Laserbearbeitungsvorrichtung
- 11: Werkstück
- 12: Haltemittel
- 13: Zustellachse
- 13x: erste Linearführung
- 13y: zweite Linearführung
- 13z: dritte Linearführung
- 13b: erste Rundführung
- 13c: zweite Rundführung
- 14: erster Laserkopf
- 15: zweiter Laserkopf
- 16: Laseranordnung
- 17: Schlitten
- 18: erste Schiene
- 19: zweite Schiene
- 20: Halteteil

- 24: Maschinengestell
- 25: Balken
- 26: Schlitten

- 30: Steuereinrichtung
- 31: Laserquelle
- 32: Scheibenlaser
- 33: Scheibe
- 34: Kühlkörper
- 35: Ausgangskoppler

- 39: Laserquellensteuerung
- 40: Laserquellenausgang
- 41: Strahlengang
- 42: Spiegel
- 45: Schneiddüse
- 46: Gaszufuhr
- 47: Zufuhrleitung
- 48: Ventil
- 49: Schneidkopfsteuerung
- 50: Umlenkspiegel

- 55: Scannersteuerung
- 56: Scanneroptik
- 57: Fokussieroptik

- 60: Grundkörper
- 61: Schneidschicht
- 62: Schneidkante
- 63: Sollkontur
- 64: Freifläche
- 65: Pulsfläche
- 66: Schnittfläche

- A1: erster Arbeitsabstand
- A2: zweiter Arbeitsabstand
- B: erste Drehachse
- C: zweite Drehachse
- F1: erster Fokuspunkt
- F2: zweiter Fokusbereich
- M: Mindestwert
- OL: optische Achse des Scheibenlasers
- O1: optische Achse des ersten Laserkopfes
- O2: optische Achse des zweiten Laserkopfes
- W: wärmebeeinflusste Zone

## Patentansprüche

1. Verfahren zur Bearbeitung eines Werkstücks (11) mit folgenden Schritten:
- Positionieren und/oder Bewegen des Werkstücks (11) relativ zu einem ersten Laserkopf (14),
- Betreiben einer umschaltbaren Laseranordnung (16) in einem ersten Betriebsmodus (I) mit dem ersten Laserkopf (14), in dem die Werkstückbearbeitung durch thermische Einwirkung erfolgt,
- Positionieren und/oder Bewegen des Werkstücks (11) relativ zu einem zweiten Laserkopf (15),
- Betreiben einer umschaltbaren Laseranordnung (16) in einem zweiten Betriebsmodus (II) mit dem zweiten Laserkopf (15), in dem die Werkstückbearbeitung durch Laserablation erfolgt
**gekennzeichnet durch**,
- zumindest teilweises Entfernen einer wärmebeeinflussten Zone (W), die während der Bearbeitung des Werkstücks (11) im ersten Betriebsmodus (I) entstanden ist, durch die Werkstückbearbeitung im zweiten Betriebsmodus (II) der Laseranordnung (16).

2. Verfahren nach Anspruch 1,
**dadurch gekennzeichnet, dass** im ersten Betriebsmodus (I) der Laseranordnung (16) Laserimpulse im Nanosekundenbereich erzeugt werden und eine Bearbeitung des Werkstücks (11) durch Laserschmelzschneiden durchgeführt wird.

3. Verfahren nach Anspruch 1,
**dadurch gekennzeichnet, dass** im zweiten Betriebsmodus (II) der Laseranordnung (16) Laserimpulse im Pikosekundenbereich erzeugt werden und eine Bearbeitung des Werkstücks (11) durch Laserablation durchgeführt wird.

4. Verfahren nach Anspruch 1,
**dadurch gekennzeichnet, dass** das Werkstück (11) im zweiten Betriebsmodus einer Fein- oder Schlichtbearbeitung zur Erzeugung einer Schneidkante (62) und/oder einer Spanleitstufe und/oder zur Strukturierung von Oberflächen unterzogen wird.

5. Verfahren nach Anspruch 1,
**dadurch gekennzeichnet, dass** die mittlere Leistung der Laserimpulse im ersten Betriebsmodus (I) größer ist als im zweiten Betriebsmodus (II).

6. Verfahren nach Anspruch 1,
**dadurch gekennzeichnet, dass** die Laseranordnung (16) eine Laserquelle (31) aufweist, und dass die Laserquelle (31) einen Festkörperlaser und insbesondere einen Scheibenlaser (32) aufweist.

7. Verfahren nach Anspruch 6,
**dadurch gekennzeichnet, dass** die Scheibe (33) des Scheibenlasers (32) in beiden Betriebsmodi (I, II) zur Verstärkung des Lichts der Lichtpumpe (36, 37) verwendet wird.

8. Verfahren nach Anspruch 1,
**dadurch gekennzeichnet, dass** der erste Laserkopf (14) als Schneidkopf zum Laserschmelzschneiden ausgeführt ist.

9. Verfahren nach Anspruch 1,
**dadurch gekennzeichnet, dass** der zweite Laserkopf (15) als Scannerkopf mit einer Scanneroptik (56) ausgeführt ist.

10. Verfahren nach Anspruch 1,
**dadurch gekennzeichnet, dass** ein erster Fokusbereich (F1), in dem die vom ersten Laserkopf (14) abgegebenen Laserimpulse fokussiert werden können, ohne Überlappung zu einem zweiten Fokusbereich (F2) angeordnet ist, in dem die vom zweiten Laserkopf (15) abgegebenen Laserimpulse fokussiert werden können.

11. Verfahren nach Anspruch 1,
**dadurch gekennzeichnet, dass** ein zweiter Fokusbereich (F2), in dem die vom zweiten Laserkopf (15) abgegebenen Laserimpulse fokussiert werden können, einen größeren Arbeitsabstand (A2) vom ersten Laserkopf (14) und/oder vom zweiten Laserkopf (15) aufweist, als ein erster Fokusbereich (F1), in dem die vom ersten Laserkopf (14) abgegebenen Laserimpulse fokussiert werden können.

12. Verfahren nach Anspruch 1,
**dadurch gekennzeichnet, dass** die Laseranordnung (16) ein bewegbares optisches Umlenkmittel (50) aufweist, das in den Strahlengang (41) der Laserimpulse bewegbar und aus dem Strahlengang (41) heraus bewegbar ist, um die Laserstrahlimpulse entweder zum ersten Laserkopf (14) oder zum zweiten Laserkopf (15) zu lenken.

## Claims

1. Method for machining a workpiece (11) comprising the following steps:
- Positioning and/or moving the workpiece (11) relative to a first laser head (14),
- Operating a switchable laser arrangement (16) in a first operating mode (I) with the first laser head (14) in which the workpiece machining is carried out by thermal action,
- Positioning and/or moving the workpiece (11) relative to a second laser head (15),
- Operating a switchable laser arrangement (16) in a second operating mode (II) with the second laser head (15) in which the workpiece machining is carried out by laser ablation,
**characterized by**
at least partly removing a heat affected zone (W) that has been created during machining of the workpiece (11) in the first operating mode (I) by means of machining the workpiece in the second operating mode (II) of the laser arrangement (16).

2. Method according to claim 1, **characterized in that** laser impulses in the nanosecond range are created in the first operating mode (I) of the laser arrangement (16) and a machining of the workpiece (11) is carried out by laser melt cutting.

3. Method according to claim 1, **characterized in that** laser impulses in the picosecond range are created in the second operating mode (II) of the laser arrangement (16) and a machining of the workpiece (11) is carried out by laser ablation.

4. Method according to claim 1, **characterized in that** the workpiece (11) is subject to a fine machining or finishing for creating a cutting edge (62) and/or a chip guide step and/or for structuring of surfaces.

5. Method according to claim 1, **characterized in that** the average power of the laser impulses in the first operating mode (I) are greater than in the second operating mode (II).

6. Method according to claim 1, **characterized in that** the laser arrangement (16) comprises a laser source (31) and that the laser source (31) comprises a solid state laser and particularly a disc laser (32).

7. Method according to claim 6, **characterized in that** the disc (33) of the disc laser (32) is used for intensifying the light of the light pump (36, 37) in both operating modes (I, II).

8. Method according to claim 1, **characterized in that** the first laser head (14) is configured as cutting head for laser melt cutting.

9. Method according to claim 1, **characterized in that** the second laser head (15) is configured as scanner head comprising a scanner optic (56).

10. Method according to claim 1, **characterized in that** a first focus area (F1), in which the laser impulses emitted by the first laser head (14) can be focused, is arranged without overlap to a second focus area (F2) in which the laser impulses emitted by the second laser head (15) can be focused.

11. Method according to claim 1, **characterized in that** a second focus area (F2), in which the laser impulses emitted by the second laser head (15) can be focused, has a longer working distance (A2) from the first laser head (14) and/or from the second laser head (15) as a first focus area (F1) in which the laser impulses emitted by the first laser head (14) can be focused.

12. Method according to claim 1, **characterized in that** the laser arrangement (16) comprises a movable optical deflecting means (50) that can be moved into and out of the optical path (41) of the laser impulses in order to direct the laser beam impulses either to the first laser head (14) or to the second laser head (15).

## Revendications

1. Procédé d'usinage d'une pièce (11), comprenant les étapes suivantes :
- positionnement et/ou déplacement de la pièce (11) par rapport à une première tête laser (14),
- fonctionnement d'un agencement laser (16) commutable dans un premier mode de service (I) avec la première tête laser (14), dans lequel l'usinage de la pièce est effectué par action thermique,
- positionnement et/ou déplacement de la pièce (11) par rapport à une deuxième tête laser (15),
- fonctionnement d'un agencement laser (16) commutable dans un deuxième mode de service (II) avec la deuxième tête laser (15), dans lequel l'usinage de la pièce est effectué par ablation laser,
**caractérisé par**
- le retrait au moins partiel d'une zone influencée par la chaleur (W), qui s'est formée au cours de l'usinage de la pièce (11) dans le premier mode de service (I), par l'usinage de la pièce dans le deuxième mode de service (II) de l'agencement laser (16).

2. Procédé selon la revendication 1, **caractérisé en ce que** dans le premier mode de service (I) de l'agencement laser (16), des impulsions laser de l'ordre de la nanoseconde sont générées, et un usinage de la pièce (11) est effectué par découpe laser par fusion.

3. Procédé selon la revendication 1, **caractérisé en ce que** dans le deuxième mode de service (II) de l'agencement laser (16), des impulsions laser de l'ordre de la picoseconde sont générées, et un usinage de la pièce (11) est effectué par ablation laser.

4. Procédé selon la revendication 1, **caractérisé en ce que** dans le deuxième mode de service (II), la pièce (11) est soumise à un usinage de précision ou de finissage pour réaliser une arête de coupe (62) et/ou un gradin de guidage de copeaux et/ou pour structurer des surfaces.

5. Procédé selon la revendication 1, **caractérisé en ce que** la puissance moyenne des impulsions laser est plus grande dans le premier mode de service (I) que dans le deuxième mode de service (II).

6. Procédé selon la revendication 1, **caractérisé en ce que** l'agencement laser (16) présente une source laser (31), et **en ce que** la source laser (31) comporte un laser à solides et en particulier un laser à disque (32).

7. Procédé selon la revendication 6, **caractérisé en ce que** le disque (33) du laser à disque (32) est utilisé dans les deux modes de service (I, II) pour renforcer la lumière de la pompe de lumière (36, 37).

8. Procédé selon la revendication 1, **caractérisé en ce que** la première tête laser (14) est réalisée sous forme de tête de découpe destinée à la découpe laser par fusion.

9. Procédé selon la revendication 1, **caractérisé en ce que** la deuxième tête laser (15) est réalisée sous forme de tête de balayage dotée d'une optique de balayage (56).

10. Procédé selon la revendication 1, **caractérisé en ce qu'**une première zone de focalisation (F1), dans laquelle peuvent être focalisées les impulsions laser émises par la première tête laser (14), est disposée sans chevauchement par rapport à une deuxième zone de focalisation (F2) dans laquelle peuvent être focalisées les impulsions laser émises par la deuxième tête laser (15).

11. Procédé selon la revendication 1, **caractérisé en ce qu'**une deuxième zone de focalisation (F2), dans laquelle peuvent être focalisées les impulsions laser émises par la deuxième tête laser (15), présente une distance de travail (A2) par rapport à la première tête laser (14) et/ou par rapport à la deuxième tête laser (15) qui est plus grande que celle d'une première zone de focalisation (F1) dans laquelle peuvent être focalisées les impulsions laser émises par la première tête laser (14).

12. Procédé selon la revendication 1, **caractérisé en ce que** l'agencement laser (16) présente un moyen de déviation optique (50) mobile qui peut être amené dans le trajet des faisceaux (41) des impulsions laser et être retiré du trajet des faisceaux (41), aux fins de diriger les impulsions de faisceau laser soit vers la première tête laser (14) soit vers la deuxième tête laser (15).
